# EUROPEAN PATENT APPLICATION

(11) **EP 4 661 127 A1**
(43) Date of publication of application: **10.12.2025**
(21) Application number: 25177096.2
(22) Date of filing: 16.05.2025
(51) Int. Cl.: H01M 10/04, H01M 10/0525, H01M 50/533, H01M 50/534

(54) **ELECTRODE PLATE, SECONDARY BATTERY INCLUDING SAME, AND METHOD FOR MANUFACTURING SECONDARY BATTERY**

(30) Priority: 04.06.2024 KR 20240073337
(71) Applicant: SAMSUNG SDI CO., LTD., Yongin-si, Gyeonggi-do 17084 (KR)
(72) Inventor: LEE, Sang Hyo, 17084 Yongin-si (KR)
(74) Representative: Marks & Clerk LLP

(57) **Abstract**

Embodiments of the present disclosure may provide an electrode plate. The electrode plate includes: a mixture section where an active material is on a substrate; an uncoated section where the active material is not on the substrate; a tab coupled to the uncoated section; and a resin layer on the mixture section.

## Description

### BACKGROUND

### 1 Field

Aspects of embodiments of the present disclosure relate to an electrode plate, a secondary battery including the electrode plate, and a method for manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

To connect each of the electrode terminals to the electrode assembly (e.g., a jelly roll), a metal tab including nickel or aluminium is welded to an uncoated section of an electrode plate where an active material is not applied. However, cracks may occur in the electrode plate due to accumulated stress in the electrode plate.

The above information disclosed in this Background section is for enhancement of understanding of the background of the present disclosure, and therefore, it may contain information that does not constitute related (or prior) art.

### SUMMARY

In a structure of an electrode assembly of a secondary battery, at parts where thickness differences may occur-such as a Ni/Al tab attachment part, a protective tape attachment part, and cutting portions of the electrode plate and a mixture section thereof-accumulated stress due to an expansion and contraction of the electrode plate that may be caused by the insertion and extraction of lithium (Li) ions during charging and discharging may occur. The accumulated stress may eventually cause cracks in the electrode plate.

For example, protective tapes, such as PE, PP, or PVC, or lamination tapes, being made of a similar material to that of the separator, may fuse with the separator due to a pressure generated during the expansion of the electrode assembly. The fusion may lead to a high friction resistance, thereby hindering the natural sliding of a positive electrode plate and a negative electrode plate, which have different expansion and contraction rates from each other. Consequently, the stress at the stepped parts (e.g., the parts where thickness differences may occur) may increase. As a result, the electrode assembly may deform, causing short circuits, which in turn, may degrade the safety and reliability of the secondary battery.

Embodiments of the present disclosure may be directed to an electrode plate, a secondary battery including the electrode plate, and a method for manufacturing the secondary battery.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, an electrode plate includes: a mixture section where an active material is on a substrate; an uncoated section where the active material is not on the substrate; a tab coupled to the uncoated section; and a resin layer on the mixture section.

In an embodiment, the resin layer may include a fluororesin layer or a silicone resin layer.

In an embodiment, the resin layer may include the fluororesin layer, and a coefficient of friction of the fluororesin layer may be 0.1 or less.

In an embodiment, the fluororesin layer may include polytetrafluoroethylene (PTFE).

In an embodiment, the electrode plate may further include a protective tape covering the tab and the uncoated section, and the resin layer may be located on the protective tape.

In an embodiment, the protective tape may include a first edge portion defined by a step difference between the tab and the uncoated section, and the resin layer may be located on the first edge portion.

In an embodiment, the protective tape may include a second edge portion defined by a step difference between the mixture section and the uncoated section, and the resin layer may be located on the second edge portion.

In an embodiment, the protective tape may include a third edge portion defined by a step difference between the mixture section and the protective tape, and the resin layer may be located on the third edge portion.

In an embodiment, the resin layer may be located on an end edge portion of the electrode plate.

In an embodiment, the resin layer may be located on an active material edge portion defined by a step difference between the mixture section and the uncoated section.

According to one or more embodiments of the present disclosure, a secondary battery includes: an electrode assembly including a separator wound with electrode plates of different polarities from each other; a can accommodating the electrode assembly; and a cap assembly coupled to the can, and connected to the electrode assembly. Each of the electrode plates includes: a mixture section where an active material is on opposite surfaces of a substrate; an uncoated section where the active material is not on the substrate; a tab coupled to the uncoated section; and a resin layer on the mixture section.

In an embodiment, the resin layer may include a fluororesin layer or a silicone resin layer with a coefficient of friction of 0.1 or less.

In an embodiment, the secondary battery may further include a protective tape covering the tab and the uncoated section, and the resin layer may be located on the protective tape.

In an embodiment, the resin layer may be located on an end edge portion of each of the electrode plates.

In an embodiment, the resin layer may be located on an active material edge portion defined by a step difference between the mixture section and the uncoated section.

In an embodiment, the resin layer may be located at a winding core or an outer periphery of the electrode assembly.

According to one or more embodiments of the present disclosure, a method for manufacturing a secondary battery includes: unwinding a first substrate; coating a first active material on the first substrate; coating a resin on the first substrate coated with the first active material to produce a first electrode plate; and winding the first electrode plate together with a second electrode plate and a separator.

In an embodiment, the coating of the resin may include a spray coating.

In an embodiment, the coating of the resin may include a wet coating using a coating solution.

In an embodiment, the method may further include a drying process after the first electrode plate is produced.

At least some of the above and other features of the invention are set out in the claims.

According to some embodiments of the present disclosure, the resin layer may be formed on the protective tape of the electrode plate. Therefore, it may be possible to prevent or substantially prevent a stress that may be caused due to an increased friction caused by a fusion of the separator at stepped portions during the contraction and expansion of the electrode plate in the charging and discharging cycles of the secondary battery.

According to some embodiments of the present disclosure, a cracking of the electrode plate may be prevented or reduced, thereby improving the safety and reliability of the secondary battery.

According to some embodiments of the present disclosure, the resin layer may include (e.g., may be made of) a low-friction polytetrafluoroethylene (PTFE) or silicone material. Therefore, it may be possible to reduce the friction resistance between the electrode plate, the separator, and the protective tape attachment area, thereby inducing a natural slipping due to the expansion and contraction of the electrode plate.

According to some embodiments of the present disclosure, it may be possible to reduce a cracking of the electrode plate by distributing the stress concentration in the stepped portions.

However, aspects and features of the present disclosure are not limited to those described above, and other aspects and features not mentioned will be clearly understood by a person skilled in the art from the detailed description, described below

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a diagram illustrating an example of an electrode plate according to an embodiment of the present disclosure.
FIG. 2 is a diagram illustrating an example in which a protective tape is attached to an electrode plate according to an embodiment of the present disclosure.
FIG. 3 is a diagram illustrating a cross-sectional view of the region 'A' in FIG. 2.
FIG. 4 is a diagram illustrating a cross-sectional view of the region 'A' in FIG. 2, along with a separator and a positive electrode plate.
FIG. 5 is a diagram illustrating a cross-sectional view of the region 'B' in FIG. 2.
FIG. 6 is a diagram illustrating a cross-sectional view of the region 'C' in FIG. 2.
FIG. 7 is a diagram illustrating a cross-sectional view of the region 'D' in FIG. 2.
FIG. 8 is a diagram illustrating a structure of a resin layer formed on a winding core of an electrode assembly of a secondary battery according to an embodiment of the present disclosure.
FIG. 9 is a diagram illustrating an example of a method for manufacturing a secondary battery according to an embodiment of the present disclosure.
FIG. 10 is a diagram illustrating an example of a method for manufacturing a secondary battery according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used herein are for the purpose of describing embodiments of the present disclosure and are not intended to limit the scope of the present disclosure.

Embodiments of the present disclosure are applicable to both winding-type and stacked-type batteries. Embodiments related to electrodes are applicable to electrodes included in winding-type batteries or stacked-type batteries.

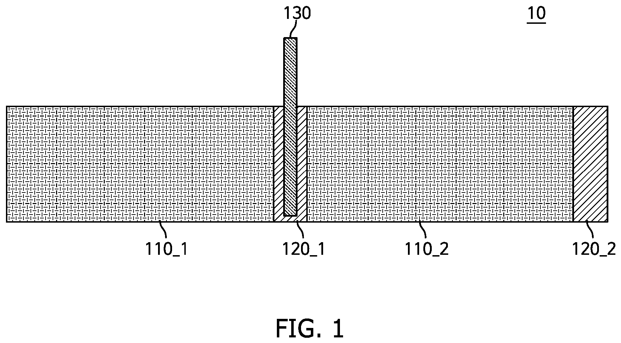

In the present disclosure, the sizes and relative dimensions of layers and regions shown in FIGS. 1 to 10 may be exaggerated for clarity of explanation. That is, the sizes shown in FIGS. 1 to 10 are for the sake of convenience of understanding and are not intended to limit the scope of the present disclosure. Furthermore, throughout the specification, like reference numerals will be given to like parts.

FIG. 1 is a diagram illustrating an example of an electrode plate according to an embodiment of the present disclosure.

In an embodiment, an electrode plate 10 may include mixture sections 110_1 and 110_2 where an active material is applied to a substrate (e.g., a base material), and uncoated sections 120_1 and 120_2 where the active material is not applied. Tabs 130 may be attached to the uncoated sections 120_1 and 120_2, respectively. For example, the active material may be applied to either a single surface or both surfaces (e.g., opposite surfaces) of the substrate, forming the mixture sections 110_1 and 110_2 on the single surface or both surfaces of the substrate. The electrode plate 10 may correspond to either a positive electrode plate or a negative electrode plate. FIG. 1 shows a portion (e.g., only a portion) of the electrode plate 10, and the present disclosure is not limited thereto. Depending on the kind of secondary battery in which the electrode plate 10 is used, a length of the electrode plate 10 may be extended. As the electrode plate 10 is extended, the position, the length, the width, and the number of the uncoated sections, the mixture sections, and the tabs may be variously modified.

In a case where the electrode plate 10 serves as the positive electrode plate, a positive electrode substrate may include (e.g., may be formed of) an aluminium foil, and a positive active material may include, for example, a transition metal oxide.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤ c≤ 0.05); LiₐMn_{2-b}X_{b}O_{4-c}D_{c} (0.90≤a≤1.8, 0≤b≤0.5, and 0 ≤ c:s: 0.05); LiₐNi_{1-b-c}CO_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0 ≤b≤0.9, 0≤c≤0.5, 0≤d≤0.5, and 0≤e≤0.1); LiₐNiG_{b}O₂ (0.90≤a≤1.8 and 0.001 ≤ b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂GbO₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃(0≤f≤2); or LiₐFePO₄(0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In a case where the electrode plate 10 serves as a negative electrode plate, a negative electrode substrate may include (e.g., may be formed of), for example, a copper foil or a nickel foil, and a negative active material may include, for example, graphite.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

In an embodiment, at least some portions of the tabs 130 may protrude from the uncoated sections 120_1 and 120_2, respectively, thus being exposed. By exposing the portions of the tabs 130 from the uncoated sections 120_1 and 120_2, the tabs 130 may not be in contact with the uncoated sections 120_1 and 120_2. For example, one ends of the tabs 130 may protrude upwards from the uncoated sections 120_1 and 120_2, thus being exposed from the uncoated sections 120_1 and 120_2, respectively. Each of the tabs 130 may be a metal tab, such as a nickel tab or an aluminium tab. The tabs 130 may be connected to (e.g., coupled to or attached to) the uncoated sections 120_1 and 120_2 by welding, extended from the uncoated sections 120_1 and 120_2, or formed by cutting uncoated sections at multiple points (e.g., for winding-type pouch cells).

In some embodiments, the tabs 130 may be formed by cutting a portion of the uncoated sections 120_1 and 120_2 (e.g., cutting multiple regions of the uncoated section to form a plurality of tabs), which can be particularly suitable for winding-type pouch cells.

FIG. 1 illustrates a part of the electrode plate 10 in which the mixture section 110_1 (110_2) and the uncoated section 120_1 (120_2) are continuously formed to be used in a winding-kind of battery. However, the present disclosure is not limited thereto. For example, the electrode plate 10 may be formed to have a suitable size (e.g., a predetermined size) including one mixture section (e.g., 110_1) and one uncoated section (e.g., 120_1), and may be used in a stacked-kind of battery.

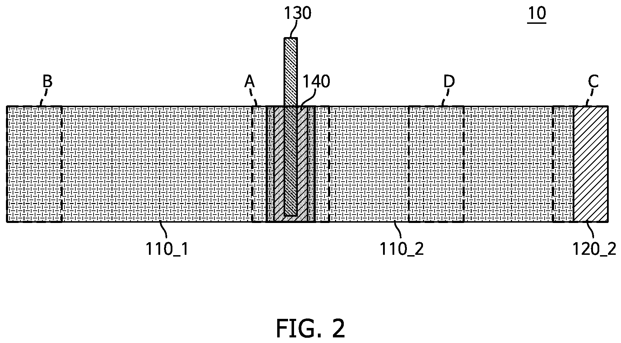

FIG. 2 is a diagram illustrating an example in which a protective tape is attached to an electrode plate according to an embodiment of the present disclosure.

In an embodiment, the electrode plate 10 may include mixture sections 110_1 and 110_2 where an active material is applied to a substrate, uncoated sections 120_1 and 120_2 where the active material is not applied, tabs 130 connected to (e.g., coupled to or attached to) the uncoated sections 120_1 and 120_2, and protective tapes 140. Each protective tape 140 may be attached to a single surface or both surfaces (e.g., opposite surfaces) of the electrode plate 10. The mixture sections 110_1 and 110_2 may be formed on a single surface or both surfaces (e.g., opposite surfaces) of the substrate.

In an embodiment, the protective tape 140 may be attached to at least respective portions of the mixture sections 110_1 and 110_2, as well as to the uncoated section 120_1. The protective tape 140 may prevent or substantially prevent the active materials of the mixture sections 110_1 and 110_2 from falling off, and may prevent or substantially prevent a short circuit of the tab 130 connected to (e.g., coupled to or attached to) the uncoated section 120_1. Additionally, the protective tape 140 may include (e.g., may be formed of) an insulating material, but the present disclosure is not limited thereto. The protective tape 140 may enhance physical properties of the substrate.

FIG. 2 illustrates that the protective tape 140 is attached to a portion (e.g., only a portion) of each of the mixture sections 110_1 and 110_2, but the present disclosure is not limited thereto.

The region 'A' shown in FIG. 2 includes the portions of the mixture sections 110_1 and 110_2 and the uncoated section 120_1 to which the protective tape 140 is attached. The region 'B' shown in FIG. 2 includes an end portion of the electrode plate 10. The region 'C' shown in FIG. 2 includes a step difference between the mixture section 110_2 and the uncoated section 120_2. The region 'D' shown in FIG. 2 includes a portion of the mixture section 110_2 located between the region 'A' and the region 'C.'

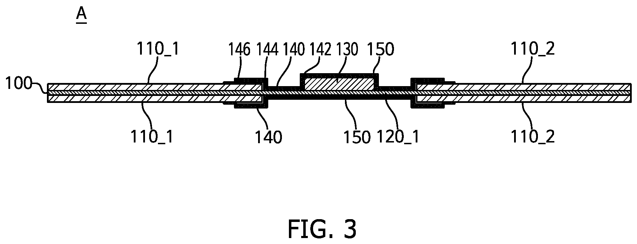

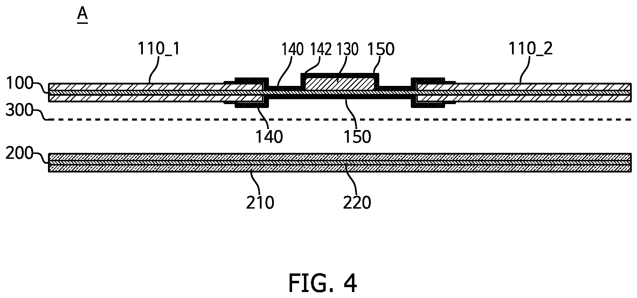

FIG. 3 is a diagram illustrating a cross-sectional view of the region 'A' in FIG. 2. FIG. 4 is a diagram illustrating a cross-sectional view of the region 'A' in FIG. 2, along with a separator and a positive electrode plate.

The electrode plate shown in FIG. 3 may be a negative electrode plate 100. The electrode plates shown in FIG. 4 may be the negative electrode plate 100 and a positive electrode plate 200.

In FIG. 4, the negative electrode plate 100, a separator 300, and the positive electrode plate 200 are shown together. In an embodiment, the electrode plate 10 may include the mixture sections 110_1 and 110_2 where the active material is applied to the substrate, the uncoated section 120_1 where the active material is not applied, the tab 130 attached to the uncoated section 120_1, the protective tape 140, and a resin layer 150 formed on the mixture sections 110_1 and 110_2 and the protective tape 140.

In an embodiment, the resin layer 150 may be a fluororesin layer or a silicone resin layer. If (e.g., when) the resin layer 150 is the fluororesin layer, the coefficient of friction may be 0.1 or less. The fluororesin layer may be formed of polytetrafluoroethylene (PTFE).

The PTFE resin layer 150 may have the coefficient of friction of 0.1 or less. If (e.g., when) the PTFE resin layer 150 has a very low coefficient of friction, which is preferably 0.05 or less, the surface may become very slippery, which may prevent or substantially prevent cracks in the electrode plate that may be caused by stress accumulation from friction. In an embodiment, the resin layer 150 may be formed by spray coating. In another embodiment, the resin layer 150 may be formed by applying a coating solution.

In an embodiment, the resin layer 150 may be formed on the protective tape 140.

In more detail, the protective tape 140 may include a first edge portion 142 formed by a step difference between the tab 130 and the uncoated section 120_1, and the resin layer 150 may be formed on the first edge portion 142. For example, the first edge portion 142 may include a continuous region formed by a plane (e.g., a top surface) of the tab 130, a side surface of the tab 130, and a plane (e.g., a top surface) of the uncoated section 120_1. Accordingly, during the repetition of the contraction and expansion of the electrode plate 100 in the charging and discharging cycles of the secondary battery, the resin layer 150 may prevent or substantially prevent an increased friction from being caused by the step difference between the tab 130 and the uncoated section 120_1, thus preventing or substantially preventing cracks in the electrode plate 100.

Further, the protective tape 140 may include a second edge portion 144 formed by step differences between the mixture sections 110_1 and 110_2 and the uncoated section 120_1, and the resin layer 150 may be formed on the second edge portion 144. For example, the second edge portion 144 may include a continuous region formed by planes (e.g., top or bottom surfaces) of the mixture sections 110_1 and 110_2, side surfaces of the mixture sections 110_1 and 110_2, and a plane (e.g., top or bottom surface) of the uncoated section 120_1. Accordingly, during the repetition of the contraction and expansion of the electrode plate 100 in the charging and discharging cycles of the secondary battery, the resin layer 150 may prevent or substantially prevent an increased friction from being caused by the step differences between the mixture sections 110_1 and 110_2 and the uncoated section 120_1, thereby preventing or substantially preventing cracks in the electrode plate 100.

Further, the protective tape 140 may include a third edge portion 146 formed by step differences between the mixture sections 110_1 and 110_2 and the protective tape 140, and the resin layer 150 may be formed on the third edge portion 146. Accordingly, during the repetition of the contraction and expansion of the electrode plate 100 in the charging and discharging cycles of the secondary battery, the resin layer 150 may prevent or substantially prevent an increased friction from being caused by the step differences between the mixture sections 110_1 and 110_2 and the protective tape 140, thereby preventing or substantially preventing cracks in the electrode plate 100.

The secondary battery according to an embodiment of the present disclosure may include an electrode assembly that is manufactured by winding a separator and electrode plates of different polarities from each other; a can accommodating the electrode assembly; and a cap assembly that is connected to (e.g., coupled to or attached to) the can and connected to the electrode assembly. The electrode plate may include mixture sections where an active material is applied to both surfaces (e.g., opposite surfaces) of a substrate, uncoated sections where the active material is not applied, tabs attached to the uncoated sections, and a resin layer formed on the mixture sections.

The electrode assembly may be manufactured by winding a positive electrode plate (e.g., 200), a negative electrode plate (e.g., 100), and a separator (e.g., 300) interposed between the positive and negative electrode plates. For example, the positive electrode plate 200 may include a positive substrate 220, and a positive mixture section 210 where a positive active material is applied. The electrode assembly may be of a wound kind, but the present disclosure is not limited thereto. For example, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON), or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The pressure generated by the expansion of the electrode assembly may cause fusion with the separator 300, leading to a high frictional resistance. This results in obstructing the natural sliding of the positive and negative electrode plates that have different contraction and expansion rates, leading to an increased stress at the step differences. However, as illustrated in FIG. 4, the resin layer 150 may be formed on the negative electrode plate, and thus, the friction resistance may be reduced. The resin layer 150 may also be formed on the surface of the positive electrode plate, instead of on the surface of the negative electrode plate.

Although FIG. 4 illustrates the separator and an additional electrode plate positioned below the electrode plate, the present disclosure is not limited thereto. The separator and the additional electrode plate may also be positioned above the electrode plate, and the number of electrode plates and separators is not particularly limited. The resin layer may reduce a stress that may occur between the electrode plate and the separator, or between electrode plates. For example, a stress concentrated at step differences formed on the electrode plate may be reduced by the resin layer.

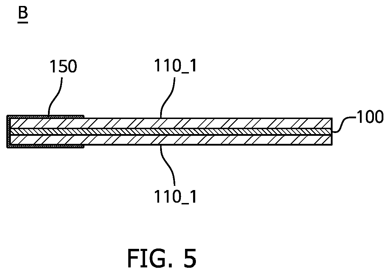

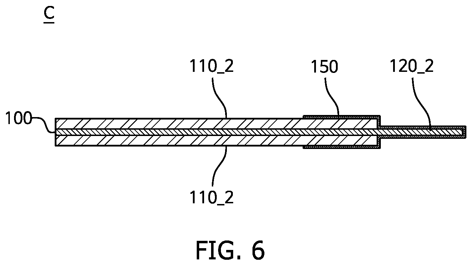

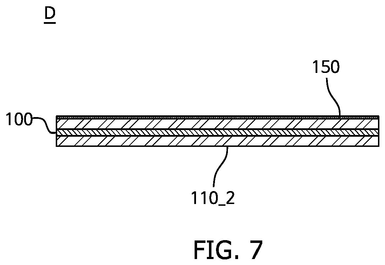

FIG. 5 is a diagram illustrating a cross-sectional view of the region 'B' in FIG. 2. FIG. 6 is a diagram illustrating a cross-sectional view of the region 'C' in FIG. 2. FIG. 7 is a diagram illustrating a cross-sectional view of the region 'D' in FIG. 2.

In an embodiment, the resin layer 150 may be formed on an end edge portion of the electrode plate. Accordingly, during the repetition of the contraction and expansion of the electrode plate in the charging and discharging cycles of the secondary battery, the resin layer 150 may prevent or substantially prevent an increased friction from being caused by a step difference at the end edge portion of the electrode plate, thereby preventing or substantially preventing cracks in the electrode plate. For example, the end edge portion of the electrode plate may include a continuous region formed by a sidewall that is defined by a side surface of the mixture section and a side surface of the substrate, and planes (e.g., top and bottom surfaces) of the mixture section.

In another embodiment, the resin layer 150 may be formed on an active material edge portion formed by a step difference between the mixture section and the uncoated section 120_2. During the repetition of the contraction and expansion of the electrode plate in the charging and discharging cycles of the secondary battery, the resin layer 150 may prevent or substantially prevent an increased friction from occurring at the active material edge portion formed by the step difference between the mixture section and the uncoated section, thereby preventing or substantially preventing cracks in the electrode plate.

For example, the active material edge portion formed by the step difference between the mixture section and the uncoated section may include a continuous region formed by a side surface of the mixture section, a plane (e.g., top or bottom surface) of the mixture section, and a plane (e.g., top or bottom surface) of the uncoated section. As another example, the active material edge portion formed by the step difference between the mixture section and the uncoated section may include a continuous region that encompasses not only the side surface and the plane of the mixture section, but also extends to a side surface of the uncoated section.

The resin layer 150 may be formed on a surface (e.g., top surface) of each of the mixture sections 110_1 and 110_2. The resin layer 150 may be formed in at least one region on the surface of the mixture section of the positive electrode plate or on the surface of the mixture section of the negative electrode plate.

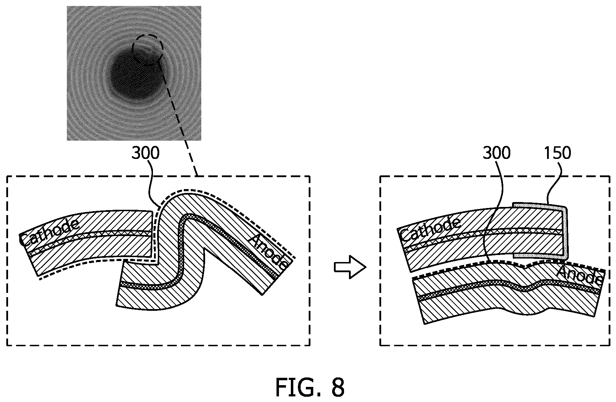

FIG. 8 is a diagram illustrating a structure of a resin layer formed on a winding core of an electrode assembly of a secondary battery according to an embodiment of the present disclosure.

Referring to FIG. 8, in a secondary battery, for example, such as in a lithium-ion battery, a process of charging and discharging occurs through the movement of lithium ions between the electrolyte and the electrodes. During this process, the electrode plates undergo physical volume changes as the electrode plates absorb or release lithium ions. This contraction and expansion phenomenon may cause significant issues that may impact the battery's lifespan and performance. For example, in an electrode assembly that is wound and inserted into a case of a secondary battery, the electrode plates located on the outer periphery of the electrode assembly may experience non-uniform mechanical stress due to the contraction and expansion of the electrode assembly. As the tension increases, the curved portions on the side surfaces may cause the electrode plates on the outer periphery of the electrode assembly to stretch, leading to cracks. Additionally, the winding core, corresponding to the central part of the electrode assembly, may have step differences at end portions thereof, resulting in non-uniform mechanical stress due to the contraction and expansion of the electrode assembly.

Cracks may eventually lead to internal disconnection or interlayer separation, resulting in a degraded battery performance or a reduced lifespan. Furthermore, the cracks may significantly reduce the safety and reliability of the secondary battery. Therefore, according to an embodiment of the present disclosure, the resin layer 150 may be located at the winding core (e.g., the core portion) of the electrode assembly. In another embodiment, the resin layer 150 may be located at the outer periphery of the electrode assembly.

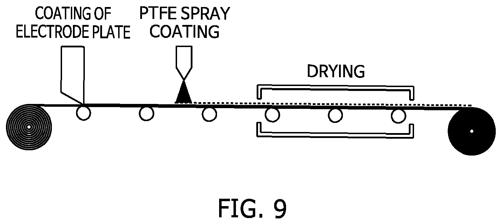

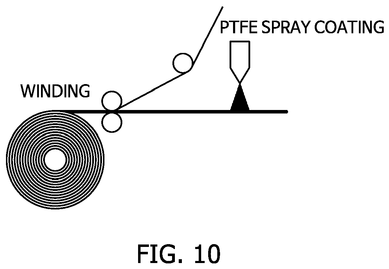

FIG. 9 is a diagram illustrating an example of a method for manufacturing a secondary battery according to an embodiment of the present disclosure. FIG. 10 is a diagram illustrating an example of a method for manufacturing a secondary battery according to an embodiment of the present disclosure.

In an embodiment, the method for manufacturing the secondary battery may include unwinding a first substrate, coating a first active material on the first substrate, coating a resin on the first substrate coated with the first active material to produce a first electrode plate, and winding the first electrode plate together with a second electrode plate and a separator. The method may further include a drying process after the first electrode plate is produced. For example, the resin-coating may correspond to a PTFE coating. The coating of the electrode plate may be performed by a blade coating method.

The resin-coating method may correspond to a spray coating. In an embodiment, the resin-coating may be a PTFE coating, which may be applied by spraying desired chemical and materials (e.g., specific or predetermined chemicals and materials), and then performing a drying process. In another embodiment, the resin-coating method may be carried out using various suitable wet coating methods that involve applying a coating solution.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. An electrode plate (10) comprising:
a mixture section (110_1, 110_2) where an active material is on a substrate (100);
an uncoated section (120_1, 120_2) where the active material is not on the substrate (100);
a tab (130) coupled to the uncoated section (120_1, 120_2); and
a resin layer (150) on the mixture section (110_1, 110_2).

2. The electrode plate (10) as claimed in claim 1, wherein the resin layer (150) comprises a fluororesin layer (150) or a silicone resin layer (150).

3. The electrode plate (10) as claimed in claim 2, wherein the resin layer (150) comprises the fluororesin layer (150), and a coefficient of friction of the fluororesin layer (150) is 0.1 or less.

4. The electrode plate (10) as claimed in claim 3, wherein the fluororesin layer (150) comprises polytetrafluoroethylene.

5. The electrode plate (10) as claimed in any one of claims 1 to 4, further comprising:
a protective tape (140) covering the tab (130) and the uncoated section (120_1, 120_2),
wherein the resin layer (150) is located on the protective tape (140).

6. The electrode plate (10) as claimed in claim 5, wherein the protective tape (140) comprises a first edge portion (142) defined by a step difference between the tab (130) and the uncoated section (120_1, 120_2), and the resin layer (150) is located on the first edge portion (142).

7. The electrode plate (10) as claimed in claim 5 or claim 6, wherein the protective tape (140) comprises a second edge portion (144) defined by a step difference between the mixture section (110_1, 110_2) and the uncoated section (120_1, 120_2), and the resin layer (150) is located on the second edge portion (144).

8. The electrode plate (10) as claimed in any one of claims 5 to 7, wherein the protective tape (140) comprises a third edge portion (146) defined by a step difference between the mixture section (110_1, 110_2) and the protective tape (140), and the resin layer (150) is located on the third edge portion (146).

9. The electrode plate (10) as claimed in any one of claims 1 to 8, wherein the resin layer (150) is located on an end edge portion of the electrode plate (10).

10. The electrode plate (10) as claimed in any one of claims 1 to 9, wherein the resin layer (150) is located on an active material edge portion defined by a step difference between the mixture section (110_1, 110_2) and the uncoated section (120_1, 120_2).

11. A secondary battery comprising:
an electrode assembly comprising a separator (300) wound with electrode plates (10) of different polarities from each other;
a can accommodating the electrode assembly; and
a cap assembly coupled to the can, and connected to the electrode assembly,
wherein each of the electrode plates (10) comprises:
a mixture section (110_1, 110_2) where an active material is on opposite surfaces of a substrate (100);
an uncoated section (120_1, 120_2) where the active material is not on the substrate (100);
a tab (130) coupled to the uncoated section (120_1, 120_2); and
a resin layer (150) on the mixture section (110_1, 110_2).

12. The secondary battery as claimed in claim 11, wherein the resin layer (150) is located at a winding core or an outer periphery of the electrode assembly.

13. A method for manufacturing a secondary battery, the method comprising:
unwinding a first substrate;
coating a first active material on the first substrate;
coating a resin on the first substrate coated with the first active material to produce a first electrode plate; and
winding the first electrode plate together with a second electrode plate and a separator.

14. The method as claimed in claim 13, wherein the coating of the resin comprises a spray coating or a wet coating using a coating solution.

15. The method as claimed in claim 13 or claim 14, further comprising a drying process after the first electrode plate is produced.
